# EUROPÄISCHE PATENTSCHRIFT

(11) **EP 3 311 045 B1**
(45) Veröffentlichungstag und Bekanntmachung des Hinweises auf die Patenterteilung: **15.05.2019**
(21) Anmeldenummer: 16717158.6
(22) Anmeldetag: 19.04.2016
(51) Int. Cl.: F16J 9/20, F16J 9/26

(54) **KOLBENRING MIT NUTDICHTUNG**
PISTON RING HAVING A GROOVE SEAL
SEGMENT DE PISTON DOTÉ D'UN ÉLÉMENT D'ÉTANCHÉITÉ DE GORGE

(30) Priorität: 19.06.2015 DE 102015109826
(43) Veröffentlichungstag der Anmeldung: 25.04.2018
(73) Patentinhaber: Federal-Mogul Burscheid GmbH, 51399 Burscheid (DE)
(72) Erfinder: MITTLER, Richard, 51399 Burscheid (DE); NATHEM, Frank, 86415 Mering (DE)
(74) Vertreter: Becker Kurig Straus
(86) Internationale Anmeldenummer: PCT/EP2016/058641
(87) Internationale Veröffentlichungsnummer: WO 2016/202485

(56) Entgegenhaltungen:
- DE-C1- 3 538 978
- DE-T2- 69 619 862
- US-A- 1 519 697
- US-A- 2 034 555
- US-A- 2 085 362

## Beschreibung

Die vorliegende Erfindung betrifft einen Kolbenring mit Nutdichtung an einer Ringflanke des Kolbenrings. Spezieller betrifft die vorliegende Erfindung einen Kolbenring mit einem in einer Nut eingelassenen flexiblen Material, wobei das Material die untere, d. h. die dem Brennraum abgewandte bzw. die dem Kolbenboden abgewandte Flanke des Kolbenrings abdichtet.

Kolbenringe und insbesondere Kompressions-Kolbenringe werden üblicherweise sowohl in der ersten (obersten) als auch in der zweiten (mittleren) Kolbenringnut von Verbrennungsmotoren eingesetzt. Hierbei ist die Funktion des Kompressionsrings durch die folgenden Eigenschaften beschrieben:
1. Abdichten des Kurbelgehäuses gegen Verbrennungsgase.
2. Abstreifen von überschüssigem Schmieröl, sodass möglichst wenig davon an der Zylinderinnenwand verbleibt und verbrannt werden kann.

Eingesetzt werden hierzu Ringe mit einer balligen Ausführung der Lauffläche. Ein Großteil des Gases strömt bzw. fließt bei einem Kompressionsring nicht nur durch den Stoß sondern je nach Wanddicke und Durchmesser über die untere Ringflanke in Richtung Kurbelgehäuse ab. Dieser Gasfuß ist heute hauptsächlich durch die Flankenrauigkeit und Welligkeit sowohl der Kolbenringflanke als auch der Kolbennutflanke an den Kontaktbereichen bedingt. Zusätzlich kann je nach Temperatureinfluss eine Verformung der Kolbennut auftreten, was sich ebenfalls negativ auf die Abdichtung auswirkt.

Bisher ist bekannt, Kompressionsringe symmetrisch oder ballig symmetrisch mit jeweils einem maximalen Kontaktpunkt an der Lauffläche auszuführen. Die Kolbenringnutflanken und die Kolbenringflanken werden dabei mit einer definierten Rauheit gefertigt, um den Kolbenringen eine definierte Beweglichkeit in Umfangsrichtung zu verleihen. Üblicherweise wird die Welligkeit weder der Kolbenringnut als auch des Kolbenrings selbst nicht Bekannte Kolbenringe sind beispielsweise in den Patentanmeldungen, DE3538978 C1, DE102010034870 A1 und DE19942241 A1 offenbart. Die DE102010034870 A1 offenbart Kolbenringe mit Durchgangslöchern in Axialrichtung, womit eine gezielte Schwächung der Wandstärke des Kolbenrings herbeigeführt wird, die insbesondere dann am wirkungsvollsten ist, wenn die Bohrungen in der Nähe der Randfaser, hier nahe zum Innendurchmesser des Kolbenrings, eingebracht werden. Die DE19942241 A1 offenbart eine Kolbenringnut mit einer Chrombeschichtung auf einer Kolbenringnutflanke. DE19942241A1
Das zu lösende Problem besteht darin, den "Blowby" durch den Spalt zwischen unterer Ringflanke und unterer Kolbenringnutflanke zu verringern.

Diese Aufgabe wird gelöst durch einen Kolbenring mit den Merkmalen des Anspruchs 1, vorteilhafte Ausführungsformen sind in den abhängigen Ansprüchen beschrieben.

Gemäß einer Ausführung der vorliegenden Erfindung wird ein Kolbenring für mindestens eine Ringflankendichtung bereitgestellt, wobei mindestens eine Ringflankendichtungsnut an einer unteren Ringflanke des Kolbenrings angeordnet ist. Als untere Ringflanke wird die Ringflanke angesehen, die sich weiter von dem Brennraum bzw. dem Kolbenboden weg befindet. Weiterhin umfasst der erfindungsgemäße Kolbenring weiter Öffnungen, die von einer oberen Ringflanke und/oder von einer Ringinnenfläche zu der Ringflankendichtungsnut bzw. dem Nutgrund der Ringflankendichtungsnut verlaufen. Dadurch können Verbrennungsgase durch die Öffnungen in die Ringflankendichtungsnut eintreten und eine darin angeordnete Ringflankendichtung nach unten gegen die untere Kolbenringnutflanke drücken und somit dort die Abdichtung verbessern.

Üblicherweise wird hier eine Dichtung durch einen dünnen Spalt mit Reibpartnern mit definierter Rauigkeit erreicht, die im Vergleich zu dem Blowby am Kolbenringstoß bzw. am Drosselfenster nahezu vernachlässigbar ist. Dichtungen wurden hier aufgrund der hohen thermischen und mechanischen Belastung sowie der notwenigen Temperaturableitung vom Kolben über den Kolbenring an die Zylinderinnenwand und der Notwendigkeit, dass sich der Kolbenring in Umfangsrichtung frei drehen lassen soll, bisher nicht verwendet. Die Abdichtung soll hier mit einer oder mehreren Dichtelementen erreicht werden, die an der unteren Ringflanke angeordnet sind. Diese Dichtelemente sollen den Gesamtspalt zwischen Kolbenring und Kolbenringnut nicht komplett verschließen, sondern nur den Spalt zwischen unterer Kolbenringflanke und unterer Kolbenringnutflanke besser abdichten.

In einer beispielhaften Ausführungsform des erfindungsgemäßen Kolbenrings mindestens eine Ringflankendichtung in der mindestens einen Ringflankendichtungsnut angeordnet, und darin zumindest teilweise eingelassen. Dies ermöglicht es eine größere und vor allem dickere Kolbenringdichtung zu verwenden, womit sich eine längere Standzeit bzw. Einsatzdauer erreichen lassen kann. Bevorzugt ist die mindestens eine Ringflankendichtung jeweils in der mindestens einen Ringflankendichtungsnut in Axialrichtung beweglich angeordnet, damit die Verbrennungsgase die durch die Öffnungen in den Raum zwischen Ringflankendichtung und dem Nutgrund der Ringflankendichtungsnut strömen und die Ringflankendichtung gegen die untere Kolbenringnutflanke des Kolbens drücken können. Die untere Ringflanke ist dabei mit mindestens einer Ringflankendichtungsnut versehen. Es können auch zwei, drei oder mehrere Ringflankendichtungsnuten an der unteren Kolbenringflanke angeordnet sein, um die eine oder die mehreren Ringflankendichtungen unterzubringen.

In einer weiteren beispielhaften Ausführungsform der vorliegenden Erfindung ist die mindestens eine Ringflankendichtungsnut als trapezförmige Nut oder als Rechtecknut ausgeführt.

In einer zusätzlichen beispielhaften Ausführung des Kolbenrings ist die mindestens eine Ringflankendichtungsnut als Schwalbenschwanz-Nut ausgeführt ist. Diese Form der Nut weist den Hauptvorteil auf, dass die Dichtung bei der Montage des Kolbenrings in die Kolbenringnut nicht leicht aus der Ringflankendichtungsnut herausspringen kann.

Bei einer zusätzlichen beispielhaften Ausführung des Kolbenrings endet die mindestens eine Ringflankendichtungsnut jeweils vor dem Kolbenringstoß. Mit dieser Ausführung kann verhindert werden, dass sich die Ringflankendichtung in der Ringflankendichtungsnut seitlich aus der Ringflankendichtungsnut in Richtung des Ringspalts herausbewegen kann, womit sich längere Standzeiten erreichen lassen.

Bei einer weiteren beispielhaften Ausführung des Kolbenrings verläuft die Ringflankendichtungsnut bis zum Kolbenringstoß. Dies ermöglicht es einen geschlossenen Dichtungsring in die Ringflankendichtungsnut einzulegen, der sich ebenfalls bis über den Ringstoß erstreckt. Dabei kann die Ringflankendichtungsnut zum Stoß hin verbreitert sein, um eine Bewegung der Ringflankendichtung in der Ringflankendichtungsnut zu ermöglichen. Die Ringflankendichtungsnut bzw. die Ringflankendichtung kann ebenfalls mit Elementen versehen sein, die eine Bewegung der Ringflankendichtung in der Ringflankendichtungsnut in Umfangsrichtung verhindern.

Bei einer anderen beispielhaften Ausführung des Kolbenrings ist die Ringflankendichtung als O-Ring ausgeführt.

Bei noch einer beispielhaften Ausführung des Kolbenrings umfasst der Kolbenring Öffnungen, die von einer oberen Ringflanke zu der Ringflankendichtungsnut verlaufen. Die Öffnungen sollen dabei eine Ringflankendichtung gegen die Ringflankendichtungsnutflanke drücken, indem Verbrennungsgase aus dem Brennraum durch die Öffnungen hinter die Ringflankendichtung strömen und so die Ringflankendichtung gegen die untere Ringflankendichtungsnutflanke drücken. Dies ist bevorzugt bei einer schwalbenschwanzförmigen Ringflankendichtungsnut der Fall, bei der ein Bereich einen größeren Druck und damit eine größere Kraft auf die Ringflankendichtung ausüben kann.

In einer zusätzlichen Ausführung des Kolbenrings umfasst dieser Öffnungen, die von einer Ringinnenseite zu der Ringflankendichtungsnut verlaufen. Die Verbrennungsgase befinden sich sowohl im Spalt zwischen oberer Kolbenringflanke und oberer Kolbenringnutflanke als auch zwischen der Innenseite bzw. Innenfläche des Kolbenrings und dem Kolbenringnutgrund. Somit kann auch ein Kanal in den Kolbenring eingebracht werden, der in Radialrichtung von der Innenfläche zur Ringflankendichtungsnut oberhalb der Ringflankendichtung verläuft. In diesen Ausführungen können Verbrennungsgase hinter die Ringflankendichtung gelangen und so die Ringflankendichtung gegen die untere Kolbenringnutflanke drücken und so die Dichtwirkung zwischen unterer Kolbenringflanke und unterer Kolbenringnutflanke verbessern. Die Ringflankendichtung kann elastisch sein und die Ringflankendichtungsnut nicht vollständig ausfüllen, sodass der Druck der Verbrennungsgase die Ringflankendichtung gegen die untere Kolbenringflankennut drückt und so den Spalt zwischen der unteren Kolbenringflanke und der unteren Kolbenringflanken abdichten kann. Da die Ringflankendichtungsnut nur einen Teil der unteren Kolbenringflanke ausmacht, kann die Lastübertragung über die Flächen stattfinden, an denen die Ringflankendichtungsnut nicht eingebracht ist.

Bei einer weiteren beispielhaften Ausführung des Kolbenrings ist ein Material der mindestens einen Ringflankendichtung elastisch. Ein elastisches Ringflankendichtungsmaterial ermöglicht eine bessere Abdichtung und sie ermöglicht, dass ein Druck in einer Kammer zwischen dem Ringflankendichtungsnutgrund und der Ringflankendichtung eine Verformung der Ringflankendichtung mit sich bringt, wodurch sich eine bessere Abdichtung erzielen lassen kann.

Bei einer anderen beispielhaften Ausführung des Kolbenrings umfasst das Material der mindestens einen Ringflankendichtung einen Metall-Werkstoff, wie Kupfer, Bronze und oder Aluminium und/oder einen temperaturbeständigen Kunststoff wie Polytetrafluorethylen, Silikongummi oder ein temperaturbeständiges Elastomer. Metall-Werkstoffe, wie Kupfer, Bronze und oder Aluminium, oder deren jeweilige Legierungen können relativ leicht hergestellt und verarbeitet werden. Metall-Werkstoffe wie die vorgenannten gestatten es die Festigkeiten und die Temperaturbeständigkeit der Ringflankendichtung genau einzustellen. Weiterhin gestattet es ein Metall-Werkstoff die Härte des Materials so einzustellen, dass sie mit der jeweiligen Dichtfläche und insbesondere der unteren Flanke der Kolbenringnut eines Kolbens aus Aluminium zusammenwirken kann um eine besonders gute Dichtwirkung zu erzielen. Polytetrafluorethylen ist ein bekanntes Material, das für hohe thermische und mechanische Belastungen ausgelegt ist und aus der die Ringflankendichtung ganz oder teilweise hergestellt werden kann. Silikondichtungen lassen sich inzwischen mit hoher Genauigkeit und hoher Temperaturfestigkeit herstellen. Es kann auch Polyparaphenylen als Hochleistungskunststoff verwendet werden. Die Ringflankendichtung kann auch beschichtet sein, um den Materialeigenschaften der jeweiligen Reibpartner Aluminiumkolben bzw. Gusseisen- oder Stahlkolbenringe Rechnung zu tragen.

In einer weiteren beispielhaften Ausführungsform des Kolbenrings mit Ringflankendichtung weist das Material der mindestens einen Ringflankendichtung einen deutlich höheren thermischen Ausdehnungskoeffizienten auf als das Material des Kolbenrings selber. Dadurch kann das Dichtungsmaterial bei steigender Betriebstemperatur aus der Ringflankendichtungsnut vortreten und so die Abdichtung an dieser Stelle verbessern. Weiterhin kann sich der Ring dabei insbesondere beim Start des kalten Motors noch in der Kolbenringnut in Umfangsrichtung drehen.

Bei einer anderen beispielhaften Ausführungsform des Kolbenrings mit Ringflankendichtung ist die mindestens eine Ringflankendichtung an einer inneren Hälfte des Kolbenrings angeordnet. Balliger Verschleiß bei herkömmlichen Kompressionsringen legt nahe, dass sich der Ring während des Betriebs vertwistet. Da die Abdichtung hauptsächlich beim Arbeitstakt selber notwendig ist, sollte die Dichtung auch an der Stelle angeordnet sein, an der die größte Flächenpressung zwischen Kolbenringflanke und Kolbenringnutflanke auftritt. Weiterhin ermöglicht diese Bauform, dass der Temperaturübertrag vom Kolben über den Kolbenring auf die gekühlte Zylinderinnenwand am wenigsten beeinträchtigt wird.

In einer bevorzugten beispielhaften Ausführungsform ist der Kolbenring ein Kompressions-Kolbenring. Kompressions-Kolbenringe eignen sich für die vorliegende Erfindung am besten, da bei ihnen der stärkste Druckunterschied vorliegt. Insbesondere werden Ölabstreifringe bereits durch den Ölfilm relativ gut abgedichtet.

Im Folgenden wird die vorliegende Erfindung anhand von schematischen Figuren von einzelnen beispielhaften Ausführungsformen näher erläutert.
Fig. 1 stellt eine Schnittansicht eines herkömmlichen eingebauten Kolbenrings dar.
Fig. 2 stellt eine Schnittansicht einer Ausführung eines erfindungsgemäßen Kolbenrings dar.
Fig. 3A zeigt eine Aufsicht auf eine Ausführung eines erfindungsgemäßen Kolbenrings.
Fig. 3B zeigt eine Schnittansicht eines erfindungsgemäßen eingebauten Kolbenrings.
Fig. 3C stellt eine weitere Schnittansicht eines erfindungsgemäßen Kolbenrings dar.
Fig. 4A zeigt eine Aufsicht auf eine weitere Ausführung eines erfindungsgemäßen Kolbenrings.
Fig. 4B stellt eine Schnittansicht eines weiteren erfindungsgemäßen eingebauten Kolbenrings dar.
Fig. 4C zeigt eine weitere Schnittansicht eines weiteren erfindungsgemäßen Kolbenrings.

Im Folgenden werden sowohl in der Beschreibung als auch in der Zeichnung gleiche Bezugszeichen verwendet um auf gleiche oder ähnliche Elemente und Komponenten Bezug zu nehmen.

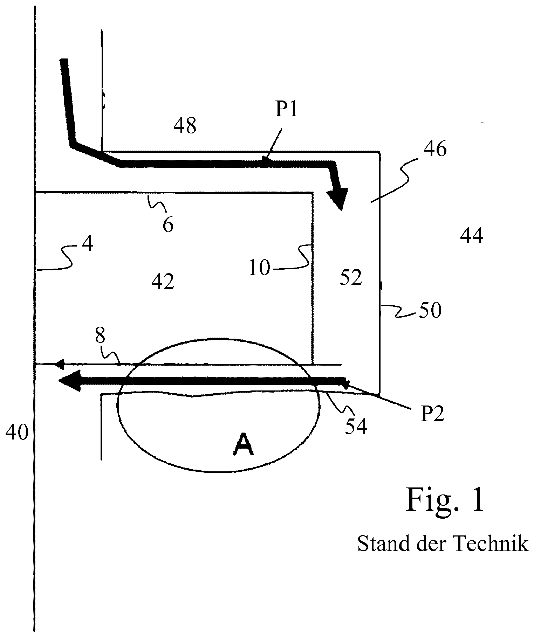

Fig. 1 stellt eine Schnittansicht eines herkömmlichen Kolbenrings 42 dar, der in eine Kolbenringnut 46 eines Kolbens 44 eingesetzt bzw. eingelegt ist. Der herkömmliche Kolbenring 42 liegt mit einer Lauffläche 4 gegen eine Laufbuchse bzw. einen Zylinder 40 an. Der herkömmliche Kolbenring 42 liegt mit einer von dem in der Figur oben befindlichen Brennraum abgewandten Flanke bzw. mit der unteren Ringflanke 8 gegen die untere Kolbenringnutflanke 54 auf. Die Rauheit der unteren Kolbenringnutflanke 54 ist zur Veranschaulichung deutlich zu stark dargestellt. Die obere Ringflanke 6 ist von der oberen Kolbenringnutflanke 48 beabstandet, wie es im Fall eines Arbeitstaktes des Motors zu erwarten ist, wenn die Verbrennungsgase den Kolbenring 42 in der Kolbenringnut nach unten drücken. Zwischen der Ringinnenfläche 10 und dem Kolbenringnutgrund 52 befindet sich das Hinterringvolumen 52. In dem Spalt zwischen der oberen Ringflanke 6 und der oberen Kolbenringnutflanke 48 herrscht beim Arbeitstakt ein Druck P1, der größer ist als ein Druck P2, der in dem Hinterringvolumen 52 im Arbeitstakt vorliegt. Durch die Rauheit der unteren Ringflanke 8 und der untern Kolbenringnutflanke 54 kann durch den dort gebildeten Dichtspalt A ein Teil der Verbrennungsgase mit dem Druck P2 entweichen. Das Ziel der vorliegenden Erfindung besteht darin den Dichtspalt A besser abzudichten. Herkömmlicherweise würde versucht dieses zu erreichen, indem die Rauheit der unteren Ringflanke 8 und der unteren Kolbenringnutflanke 54 verringert wird.

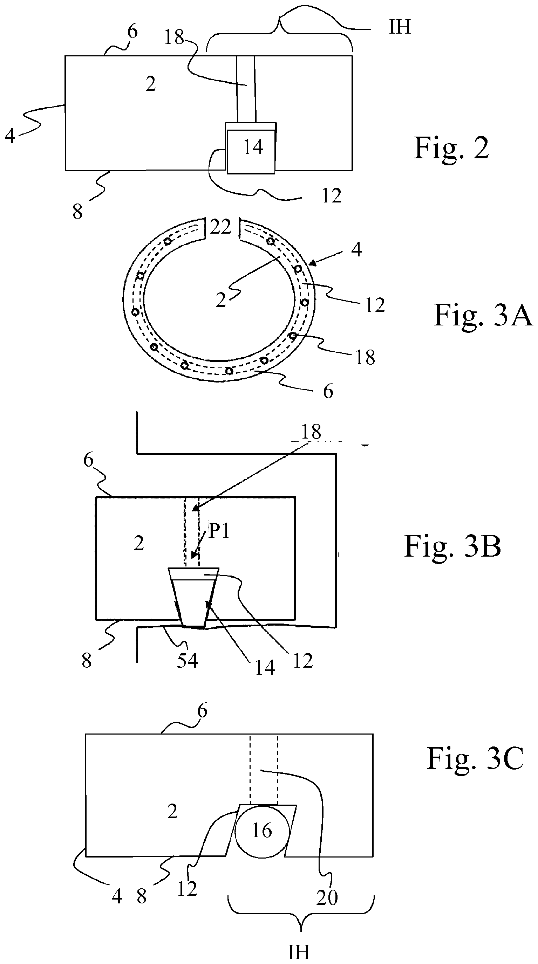

Fig. 2 stellt eine Schnittansicht einer Ausführung eins erfindungsgemäßen Kolbenrings dar. Der Kolbenring ist mit einer Ringflankendichtungsnut 12 versehen in der eine Ringflankendichtung 14 angeordnet ist. Die Ringflankendichtungsnut 12 und auch die Ringflankendichtung 14 bedecken nur einen Teil der unteren Ringflanke, sodass ein Großteil der unteren Ringflanke 8 mit einer nicht gezeigten unteren Kolbenringnutflanke in Kontakt stehen kann, wodurch der Wärmeübertrag von dem Kolben über den Ring 2 auf die Zylinderinnenwand weitgehend unbeeinträchtigt bleibt. Das Material der Ringflankendichtung 14 kann einen größeren Wärmeausdehnungskoeffizienten aufweisen, um dem Spalt insbesondere bei einem Motor der seine Betriebstemperatur erreicht hat besser abzudichten. Von dem Grund der Ringflankendichtungsnut 12 verlaufen Öffnungen 18 nach oben, die es Verbrennungsgasen gestatten die Ringflankendichtung 14 in der Ringflankendichtungsnut 12 nach unten gegen eine untere Kolbenringnutflanke eines Kolbens in die der erfindungsgemäße Kolbenring eingesetzt wurde zu drücken.

Anstelle einer Rechtecknut können auch trapezförmige Nuten oder u-förmige Nuten eingesetzt werden. In Figur 2 ist die Ringflankendichtung 14 in Radialrichtung in einer inneren Hälfte (IH) des Kolbenrings 2 angeordnet.

Fig. 3A zeigt eine Aufsicht auf eine Ausführung eines erfindungsgemäßen Kolbenrings 2. In der Aufsicht ist die obere Ringflanke 6 zu erkennen der Außenrand wird durch die Lauffläche 4 gebildet und der Ringstoß ist mit dem Bezugszeichen 22 gekennzeichnet. Die Ringflankendichtungsnut 12 ist lediglich gestrichelt gezeichnet, das sie sich auf der dem Betrachter abgewandten Seite des Kolbenrings 2 befindet. Die Ringflankendichtungsnut 12 endet hier vor dem Ringstoß 22. Es ist jedoch auch möglich die Ringflankendichtungsnut 12 bis zu dem Ringstoß 22 laufen zu lassen und die Ringflankendichtung 14 durch mechanische Vorkehrungen daran zu hindern in Umfangsrichtung aus der Ringflankendichtungsnut 12 zu wandern.

Fig. 3B zeigt eine Schnittansicht eines erfindungsgemäßen eingebauten Kolbenrings 2. Der Kolbenring 2 weist die Aufsicht von Fig. 3A auf. Der Kolbenring ist in die Kolbenringnut eines Kolbens eingesetzt. Die Ringflankendichtungsnut 12 ist trapezförmig ausgeführt, um die Ringflankendichtung 14 in der Ringflankendichtungsnut 12 zu halten. Der Kolbenring 2 ist mit Öffnungen 18 versehen, die von der oberen Ringflanke 6 zur Ringflankendichtungsnut 12 verlaufen. Durch die Öffnungen 18 können sich die Verbrennungsgase mit dem Druck P1 bis in die Ringflankendichtungsnut 12 ausbreiten und die 18 Ringflankendichtung aus der Ringflankendichtungsnut 12 gegen die untere Kolbenringnutflanke 54 drücken. Wenn die Ringflankendichtung 14 elastisch genug ist, kann sich der Druck auf die Kolbenringnutflanke 54 gemäß dem Verhältnis der Verjüngung der Ringflankendichtungsnut 12 erhöhen. In Figur 3B ist die Ringflankendichtung 14 in Radialrichtung mittig in dem Kolbenring 2 angeordnet.

Fig. 3C stellt eine weitere Schnittansicht eines weiteren beispielhaften erfindungsgemäßen Kolbenrings dar. Der Kolbenring 2 weist ebenfalls die Aufsicht von Fig. 3A auf. Die Ringflankendichtungsnut 12 ist parallelogrammförmig ausgeführt, um der als O-Ring 16 bzw. offenen O-Ring 16 ausgeführten Ringflankendichtung 14 eine verbesserte Dichtgeometrie zur Verfügung stellen zu können. Der O-Ring 16 könnte auch geschlossen ausgeführt werden, wenn das Material stark genug ist um im Stoßbereich den Brennraumgasen ausgesetzt zu werden, und die Enden der Ringflankendichtungsnut 12 am Stoß hinreichend glatt auslaufen um ein Aufscheuern des O-Rings 16 zu verhindern.

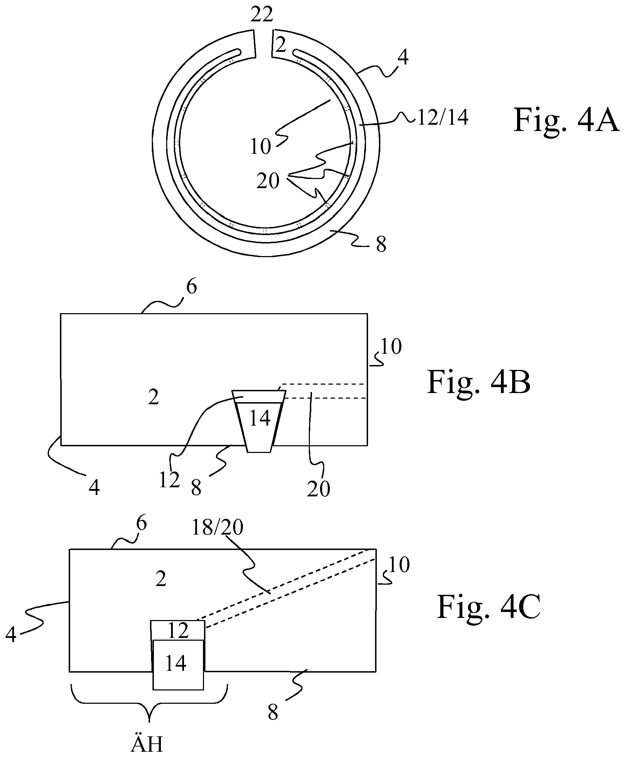

Fig. 4A zeigt eine Aufsicht auf eine Ausführung eines erfindungsgemäßen Kolbenrings 2. In der Aufsicht von unten ist die untere Ringflanke 6 und die Ringflankendichtungsnut 12 bzw. die Ringflankendichtung 14 zu erkennen. Der Außenrand wird durch die Lauffläche 4 gebildet und der Ringstoß ist mit dem Bezugszeichen 22 gekennzeichnet. Von der Innenseite bzw. die Innenfläche 10 des Kolbenrings 2 verlaufen Öffnungen 20 zu der Ringflankendichtungsnut 12. Die Öffnungen sind lediglich gestrichelt gezeichnet, da sie sich in Radialrichtung durch den Kolbenring erstrecken. Auch hier endet die Ringflankendichtungsnut 12 vor dem Ringstoß 22. Im Vergleich zu der Ausführung der Figuren 3A bis 3C wirkt hier ein geringerer Druck auf die Dichtung 14, wodurch beispielsweise verhindert werden kann, dass die Ringflankendichtung 14 zu stark aus der Ringflankendichtungsnut 12 herausgedrückt werden kann.

Fig. 4B zeigt eine Schnittansicht eines erfindungsgemäßen eingebauten Kolbenrings 2. Der Kolbenring 2 weist die Aufsicht von Fig. 4A auf. Die Ringflankendichtungsnut 12 ist trapezförmig ausgeführt, um die Ringflankendichtung 14 in der Ringflankendichtungsnut 12 zu halten. Der Kolbenring 2 ist mit Öffnungen 20 versehen, die von der Kolbenringinnenfläche 10 zur Ringflankendichtungsnut 12 verlaufen. Durch die Öffnungen 18 können sich die Verbrennungsgase mit dem Druck P2 bis in die Ringflankendichtungsnut 12 ausbreiten und die 18 Ringflankendichtung aus der Ringflankendichtungsnut 12 gegen die nicht dargestellte untere Kolbenringnutflanke 54 drücken.

Fig. 4C stellt eine weitere Schnittansicht eines weiteren beispielhaften erfindungsgemäßen Kolbenrings 2 dar. Der Kolbenring 2 weist ebenfalls die Aufsicht von Fig. 4A auf. Die Ringflankendichtungsnut 12 ist rechteckig ausgeführt, um der Dichtung einen möglichst geringen Widerstand gegen eine Verschiebung in Richtung der nicht dargestellten unteren Kolbenringnutflanke 54 zu erzeugen. Da die Geometrie der Ringflankendichtungsnut 12 reicht auch der geringere Druck P2 aus, um eine hinreichend gute Abdichtung des Dichtspalts zu erreichen. In Figur 4C ist die Ringflankendichtung 14 in Radialrichtung in einer äußeren Hälfte (ÄH) des Kolbenrings 2 angeordnet.

Um die Beschreibung nicht zu überlasten, wurde darauf verzichtet alle Kombinationen von Ringflankendichtungsnuten 12, Ringflankendichtungen 14, Öffnungen 18 und 20 und der radialen Positionen der Ringflankendichtungsnuten einzeln aufzuführen. Diese Kombinationen, die sich aus den Ausführungsformen ergeben, sollen ebenfalls als offenbart betrachtet werden.

### Bezugszeichenliste

- 2: Kolbenring
- 4: Lauffläche
- 6: obere Ringflanke
- 8: untere Ringflanke
- 10: Ringinnenfläche
- 12: Ringflankendichtungsnut
- 14: Ringflankendichtung
- 16: O-Ring
- 18: Öffnungen, von der oberen Ringflanke (6) zur Ringflankendichtungsnut
- 20: Öffnungen, von einer Ringinnenseite zu der Ringflankendichtungsnut
- 22: Kolbenringstoß
- 40: Laufbuchse / Zylinder
- 42: herkömmlicher Kolbenring
- 44: Kolben
- 46: Kolbenringnut
- 48: obere Kolbenringnutflanke
- 50: Kolbenringnutgrund
- 52: Hinterringvolumen
- 54: untere Kolbenringnutflanke

- A: Dichtungsspalt zwischen unterer Ringflanke und unterer Kolbenringnutflanke
- ÄH: Äußere Hälfte der radialen Dicke des Kolbenrings
- IH: Innere Hälfte der radialen Dicke des Kolbenrings
- P1: Druck der Verbrennungsgase an der oberen Ringflanke
- P2: Druck der Verbrennungsgase in dem Hinterringvolumen

## Patentansprüche

1. Kolbenring (2) für mindestens eine Ringflankendichtung (14), wobei mindestens eine Ringflankendichtungsnut (12) an einer unteren Ringflanke (8) des Kolbenrings angeordnet ist, umfassend Öffnungen (18), die von einer oberen Ringflanke (6) und/oder von einer Ringinnenfläche (10) zu der Ringflankendichtungsnut (12) verlaufen, **dadurch gekennzeichnet dass** eine Ringflankendichtung (14) vorgesehen ist, die zumindest teilweise in die mindestens eine Ringflankendichtungsnut (12) eingelassen ist.

2. Kolbenring (2) mit Ringflankendichtung (14) nach Anspruch 1, wobei die mindestens eine Ringflankendichtungsnut (12) als trapezförmige Nut ausgeführt ist.

3. Kolbenring (2) mit Ringflankendichtung (14) nach einem der Ansprüche 1 bis 2, wobei die mindestens eine Ringflankendichtungsnut (12) als Schwalbenschwanz-Nut ausgeführt ist.

4. Kolbenring (2) mit Ringflankendichtung (14) nach einem der Ansprüche 1 bis 3, wobei die mindestens eine Ringflankendichtungsnut (12) vor dem Kolbenringstoß endet.

5. Kolbenring (2) mit Ringflankendichtung (14) nach einem der Ansprüche 1 bis 4, wobei die Ringflankendichtungsnut (12) bis zum Kolbenringstoß verläuft.

6. Kolbenring (2) mit Ringflankendichtung (14) nach einem der Ansprüche 1 bis 5, wobei die mindestens eine Ringflankendichtung (14) als O-Ring (16) ausgeführt ist.

7. Kolbenring (2) mit Ringflankendichtung (14) nach einem der Ansprüche 1 bis 5, wobei die Öffnungen (18), von der oberen Ringflanke (6) zu der Ringflankendichtungsnut (12) verlaufen.

8. Kolbenring (2) mit Ringflankendichtung (14) nach Anspruch 1 bis 7, wobei die Öffnungen (20), von der Ringinnenfläche (10) zu der Ringflankendichtungsnut (12) verlaufen.

9. Kolbenring (2) mit Ringflankendichtung (14) nach einem der vorstehenden Ansprüche 1 bis 8, wobei ein Material der mindestens einen Ringflankendichtung (14) elastisch ist.

10. Kolbenring (2) mit Ringflankendichtung (14) nach einem der vorstehenden Ansprüche, wobei das Material der mindestens einen Ringflankendichtung (14) einen Metall-Werkstoff, wie Kupfer, Bronze und oder Aluminium, und/oder einen temperaturbeständigen Kunststoff wie Polytetrafluorethylen, ein Silikongummi und/oder ein temperaturbeständiges Elastomer umfasst.

11. Kolbenring (2) mit Ringflankendichtung (14) nach einem der vorstehenden Ansprüche 1 bis 8, wobei das Material der mindestens einen Ringflankendichtung (14) einen deutlich höheren thermischen Ausdehnungskoeffizienten aufweist als der Kolbenring (2).

12. Kolbenring (2) nach einem der vorstehenden Ansprüche 1 bis 11, wobei die mindestens eine Ringflankendichtung (14) an einer inneren Hälfte der radialen Dicke des Kolbenrings (2) angeordnet ist.

13. Kolbenring (2) nach einem der vorstehenden Ansprüche 1 bis 12, wobei der Kolbenring (2) ein Kompressions-Kolbenring (2) ist.

## Claims

1. A piston ring (2) for at least one ring flank seal (14), wherein at least one ring flank seal groove (12) is arranged on a lower ring flank (8) of the piston ring, comprising openings (18) that extend from an upper ring flank (6) and/or from an inner surface (10) of the ring to the ring flank seal groove (12), **characterized in that** a ring flank seal (14) is provided that is at least partially accommodated in the at least one ring flank seal groove (12) .

2. The piston ring (2) with ring flank seal (14) according to claim 1, wherein the at least one ring flank seal groove (12) is realized in the form of a trapezoidal groove.

3. The piston ring (2) with ring flank seal (14) according to one of claims 1 to 2, wherein the at least one ring flank seal groove (12) is realized in the form of a dovetail groove.

4. The piston ring (2) with ring flank seal (14) according to one of claims 1 to 3, wherein the at least one ring flank seal groove (12) ends in front of the piston ring joint.

5. The piston ring (2) with ring flank seal (14) according to one of claims 1 to 4, wherein the ring flank seal groove (12) extends up to the piston ring joint.

6. The piston ring (2) with ring flank seal (14) according to one of claims 1 to 5, wherein the at least one ring flank seal (14) is realized in the form of an O-ring (16).

7. The piston ring (2) with ring flank seal (14) according to one of claims 1 to 5, wherein the openings (18) extend from the upper ring flank (6) to the ring flank seal groove (12).

8. The piston ring (2) with ring flank seal (14) according to one of claims 1 to 7, wherein the openings (20) extend from the inner surface (10) of the ring to the ring flank seal groove (12).

9. The piston ring (2) with ring flank seal (14) according to one of the preceding claims 1 to 8, wherein a material of the at least one ring flank seal (14) is elastic.

10. The piston ring (2) with ring flank seal (14) according to one of the preceding claims, wherein the material of the at least one ring flank seal (14) comprises a metallic material, such as copper, bronze and/or aluminum, and/or a temperature-resistant plastic, such as polytetrafluoroethylene, silicone rubber and/or a temperature-resistant elastomer.

11. The piston ring (2) with ring flank seal (14) according to one of preceding claims 1 to 8, wherein the material of the at least one ring flank seal (14) has a significantly higher coefficient of thermal expansion than the piston ring (2).

12. The piston ring (2) according to one of preceding claims 1 to 11, wherein the at least one ring flank seal (14) is arranged on an inner half of the radial thickness of the piston ring (2).

13. The piston ring (2) according to one of preceding claims 1 to 12, wherein the piston ring (2) is a compression piston ring (2) .

## Revendications

1. Segment de piston (2) pour au moins un élément d'étanchéité de flanc de segment (14), dans lequel au moins une gorge pour élément d'étanchéité de flanc de segment (12) est disposée au niveau d'un flanc de segment inférieur (8) du segment de piston, comprenant des ouvertures (18) s'étendant depuis un flanc de segment supérieur (6) et/ou d'une surface intérieure de segment (10) jusqu'à la gorge pour élément d'étanchéité de flanc de segment (12), **caractérisé en ce qu'**un élément d'étanchéité de flanc de segment (14) est prévu qui est noyé au moins partiellement dans ladite au moins une gorge pour élément d'étanchéité de flanc de segment (12).

2. Segment de piston (2) doté d'un élément d'étanchéité de flanc de segment (14) selon la revendication 1, dans lequel ladite au moins une gorge pour élément d'étanchéité de flanc de segment (12) est réalisée sous forme de gorge trapézoïdale.

3. Segment de piston (2) doté d'un élément d'étanchéité de flanc de segment (14) selon l'une quelconque des revendications 1 à 2, dans lequel ladite au moins une gorge pour élément d'étanchéité de flanc de segment (12) est réalisée sous forme de gorge en queue d'aronde.

4. Segment de piston (2) doté d'un élément d'étanchéité de flanc de segment (14) selon l'une quelconque des revendications 1 à 3, dans lequel ladite au moins une gorge pour élément d'étanchéité de flanc de segment (12) se termine avant la coupure de segment de piston.

5. Segment de piston (2) doté d'un élément d'étanchéité de flanc de segment (14) selon l'une quelconque des revendications 1 à 4, dans lequel la gorge pour élément d'étanchéité de flanc de segment (12) s'étend jusqu'à la coupure de segment de piston.

6. Segment de piston (2) doté d'un élément d'étanchéité de flanc de segment (14) selon l'une quelconque des revendications 1 à 5, dans lequel ledit au moins un élément d'étanchéité de flanc de segment (14) est réalisé sous forme de joint torique (16).

7. Segment de piston (2) doté d'un élément d'étanchéité de flanc de segment (14) selon l'une quelconque des revendications 1 à 5, dans lequel les ouvertures (18) s'étendent depuis le flanc de segment supérieur (6) jusqu'à la gorge pour élément d'étanchéité de flanc de segment (12).

8. Segment de piston (2) doté d'un élément d'étanchéité de flanc de segment (14) selon l'une quelconque des revendications 1 à 7, dans lequel les ouvertures (20) s'étendent depuis la surface intérieure de segment (10) jusqu'à la gorge pour élément d'étanchéité de flanc de segment (12).

9. Segment de piston (2) doté d'un élément d'étanchéité de flanc de segment (14) selon l'une quelconque des revendications précédentes 1 à 8, dans lequel un matériau dudit au moins un élément d'étanchéité de flanc de segment (14) est élastique.

10. Segment de piston (2) doté d'un élément d'étanchéité de flanc de segment (14) selon l'une quelconque des revendications précédentes, dans lequel le matériau dudit au moins un élément d'étanchéité de flanc de segment (14) comprend un matériau métallique, tel que le cuivre, le bronze et/ou l'aluminium, et/ou une matière plastique résistante aux variations de température, telle que le polytétrafluoréthylène, un caoutchouc silicone et/ou un élastomère résistante aux variations de température.

11. Segment de piston (2) doté d'un élément d'étanchéité de flanc de segment (14) selon l'une quelconque des revendications précédentes 1 à 8, dans lequel le matériau dudit au moins un élément d'étanchéité de flanc de segment (14) présente un coefficient de dilatation thermique nettement supérieur au segment de piston (2).

12. Segment de piston (2) selon l'une quelconque des revendications précédentes 1 à 11, dans lequel ledit au moins un élément d'étanchéité de flanc de segment (14) est disposé dans une moitié intérieure de l'épaisseur radiale du segment de piston (2).

13. Segment de piston (2) selon l'une quelconque des revendications précédentes 1 à 12, dans lequel le segment de piston est un segment de piston de compression (2).
